# FASCICULE DE BREVET EUROPEEN

(11) **EP 3 891 099 B1**
(45) Date de publication et mention de la délivrance du brevet: **07.06.2023**
(21) Numéro de dépôt: 19832744.7
(22) Date de dépôt: 04.12.2019
(51) Int. Cl.: C01B 25/02, C01B 25/023, C01B 25/027

(54) **PROCÉDÉ POUR LA PRODUCTION DU PHOSPHORE**
VERFAHREN ZUR HERSTELLUNG VON PHOSPHOR
METHOD OF PREPARING PHOSPHORUS

(30) Priorité: 06.12.2018 MA 44177
(43) Date de publication de la demande: 13.10.2021
(73) Titulaire: Université Mohammed VI Polytechnique, Ben Guerir, 43150 (MA); Université Hassan 1er de Settat, Settat, 26002 (MA); Université Hassan II de Casablanca, Casablanca, 20000 (MA)
(72) Inventeur: ALAMI HAMEDANE, Younes, Casablanca, 20000 (MA); HANNACHE, Hassan, Casablanca, 20000 (MA); MANOUN, Bouchaib, Settat (MA); TAMRAOUI, Youssef, Settat (MA); OUMAM, Mina, Mohammedia (MA); GMOUH, Said, Sale (MA)
(74) Mandataire: Vuille, Roman
(86) Numéro de dépôt international: PCT/MA2019/050003
(87) Numéro de publication internationale: WO 2020/117033

(56) Documents cités:
- WO-A1-01/25147
- WO-A1-2010/029570
- LING ZHAO ET AL: "Phosphorus-Assisted Biomass Thermal Conversion: Reducing Carbon Loss and Improving Biochar Stability", PLOS ONE, vol. 9, no. 12, 22 décembre 2014 (2014-12-22), pages 1-15, XP055677281, DOI: 10.1371/journal.pone.0115373

## Description

### Domaine de l'invention

La présente invention se rapporte au domaine de production de phosphore élémentaire. Elle concerne en particulier un procédé de synthèse du phosphore rouge et /ou Blanc par réduction de l'acide phosphorique.

### Etat de l'art antérieur

Le phosphore élémentaire se présente principalement sous trois formes : le phosphore noir, rouge et blanc.

Le phosphore élémentaire se trouve principalement sous la forme du phosphore rouge car le phosphore blanc se transforme sous l'action de la lumière et de la chaleur en phosphore rouge.

Le pentoxyde de phosphore (P₂O₅) est également intéressant, c'est l'unité qui est largement utilisé par les agronomes et les laboratoires d'analyse pour exprimer le résultat de la mesure de phosphore dans le sol, Il se forme lorsque le phosphore brûle à l'air et il réagit très violemment avec l'eau pour donner l'acide phosphorique.

Dans le domaine industriel, les organophosphorés suscitent un intérêt et rentrent dans la formulation de produits courants entre autres, produits d'entretien, pharmaceutiques et de fertilisation.

Les applications du phosphore sont nombreuses. Sous formes de sels d'acide on les trouve comme composants de formulation des lessives et de produits pour les traitements des eaux de chaudière afin d'éviter les problèmes d'entartrage.

Plusieurs travaux ont décrit des procédés pour produire le phosphore :
Il est obtenu par traitement hydrothermal de la biomasse [1], Dans ce cadre des charges à base de biomasse sont traitées dans des conditions de traitement hydrothermique pour produire un produit liquide hydrocarboné et une partie solide. La partie solide peut contenir une partie du phosphore provenant de la charge de biomasse. La quantité du phosphore dans le solide peut augmenter pour certaines charges de biomasse en ajoutant un métal multivalent à l'alimentation. Le procédé de traitement hydrothermique de la biomasse, consiste à introduire une charge de biomasse ayant un rapport eau / biomasse d'au moins 1 : 1 dans une zone de réaction pour produire un produit à plusieurs phases, comprenant une partie de solides contenant environ 80% de la teneur en phosphore de la charge de biomasse. La quantité de phosphore produite reste très faible pour ce procédé.

Un procédé de récupération de phosphore de boues organiques [2] consiste à produire des cendres incinérées à partir de boues organiques. La récupération du phosphore est réalisée en mettant en contact le phosphore vaporisé avec de l'eau pour condenser le phosphore. Le phosphore vaporisé est oxydé en pentoxyde de phosphore et le phosphore est récupéré sous forme d'acide phosphorique en mettant en contact le pentoxyde de phosphore avec l'eau. Ce procédé est coûteux puisqu'il demande une incinération de la boue contenant beaucoup d'eau et le rendement en phosphore est relativement faible.

La production de phosphore par réaction d'un mélange comprenant du phosphate de calcium, du sable de quartz et du coke. La réaction est effectuée entre 1300 ° C et 1700 ° C par chauffage électrique dans un lit autogène de coke fluidisé [3]. Le coke est utilisé dans des particules ayant une taille de 0,1 à 5 mm, et chacun des composants de phosphate de calcium, de sable de quartz et de coke formant le mélange est utilisé dans des particules ayant une taille de 0,01 à 5 mm. Le four de réduction utilisé dans la mise en oeuvre de ce procédé est constitué d'une cuve de four au carbone munie d'au moins une électrode mobile en saillie par le dessus, d'un calorifuge réfractaire encapsulant la cuve, d'au moins une entrée de matière première, sortie d'évacuation du gaz de four contenant du phosphore et du monoxyde de carbone. Ce procédé est très énergivore.

La production du phosphore P4 par chauffage d'un mélange d'acide phosphorique et d'un réducteur particulier à base de carbone (pyrolytique) de surface spécifique supérieure à 50 m²/g, avec un rayonnement micro-ondes dans une atmosphère non oxydante a été réalisé en 2001 [4]. Ce procédé nécessite l'utilisation d'un réducteur micronisé à haute valeur ajoutée. Cependant le coût du réducteur pyrolytique et le type de chauffage restent élevés.

WO 2010/029570 se rapporte à un procédé de fabrication de phosphore élémentaire par traitement thermique, opéré à une température supérieure à 850°C, d'une charge comprenant de l'acide phosphorique et d'une source de carbone, par exemple de poudre de charbon. La récupération du phosphore s'effectue par barbotage dans l'eau.

WO 01/25147 traite également de la préparation de phosphore élémentaire par carboréduction d'acide phosphorique et comprenant les étapes suivantes : 1) chauffage par micro-ondes du mélange acide phosphorique/source de carbone sous atmosphère non oxydante ; 2) extraction du phosphore sous forme vapeur ; 3) condensation des vapeurs de phosphore.

### Exposé de l'invention

L'invention a pour objet le développement d'un nouveau procédé de production du phosphore P4 à partir de l'acide phosphorique brute ou purifié. Dans ce procédé on mélange l'acide phosphorique et une source hydrophile de carbone et d'hydrogène (biomasse, kérogène, boue des stations d'épuration « STEP », polymère organique), le mélange est traité à une température de 80 à 150 °C pour assurer le greffage des phosphates sur le squelette carboné. La production du phosphore P4 est réalisée par traitement thermique du précurseur à une température à laquelle le phosphore est produit. La gamme de température est de 550°C à 950°C. Ce procédé peut être mis en oeuvre à des températures inférieures à celles de la production classique du phosphore sans avoir lieu à la production de sous-produits solides normalement formés dans la production classique du phosphore. Comme application on peut produire de l'acide phosphorique pur à usage alimentaire ou médicale.

### Description des figures

- Figure 1 : Illustration du greffage des ions phosphates sur le squelette carboné via la formation des ponts POC après imprégnation du support hydrophile par la solution d'acide phosphorique.
- Figure 2 : Schéma du pyrolyseur.
- Figure 3 : Analyse par fluorescence X.
- Figure 4 : Spectre Raman du phosphore blanc P4.
- Figure 5 : Illustration de l'analyse des thermogrammes montrant la dépendance du taux de résidu de la quantité d'acide phosphorique imprégnée dans la biomasse.
- Figure 6 : Décroissance du taux de résidu en fonction de la température.
- Figure 7 : Taux de transformation du phosphore à l'état gazeux.
- Figure 8 : Evolution du produit du pourcentage de phosphore par le taux du résidu.

### Description de l'invention

La présente invention a pour objectif de mettre en oeuvre un nouveau procédé de production du phosphore à partir de l'acide phosphorique. Pour ce faire, l'invention vise la mise au point d'un procédé efficace pour obtenir le phosphore élémentaire par réduction de l'ion phosphate en présence de source hydrophile de carbone et d'hydrogène à des températures n'excédant pas 950 °C.

La production du phosphore P4 s'établit en trois étapes :
1. Préparation du mélange : L'acide phosphorique est mélangé avec une source hydrophile de carbone et d'hydrogène, de préférence cellulosique (biomasse, kérogène, boue des STEP, etc....) ;
2. Traitement du mélange : le mélange est traité, à une température allant de 80 à 150 °C, pour assurer le greffage des phosphates sur le squelette carboné ;
3. Pyrolyse du précurseur : le précurseur est traité thermiquement, dans un four à chauffage conventionnel fixe, rotatif ou à lit fluidisé, en milieu totalement ou partiellement inerte à une température comprise entre 550 et 950°C.

### Exemple

L'exemple suivant est présenté pour décrire le procédé de fabrication du phosphore P4. Cependant, l'exemple ne doit pas être interprété comme limitant le procédé de fabrication développé.

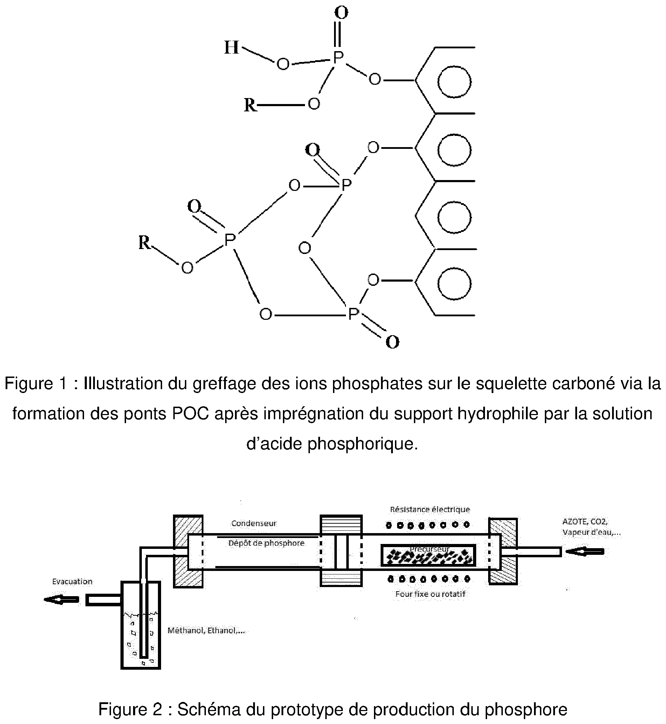

Préparation du précurseur : Différentes sources de carbone, notamment de biomasse végétale (Grignons d'olives, marc de café, écorce de grenade, sciure de bois, etc.) ont été testées pour différents rapports massiques du mélange Acide phosphorique/Source hydrophile de carbone et d'hydrogène. Le mélange a été traité thermiquement pour assurer le greffage des phosphates sur le squelette carboné. En effet, sous l'effet de la température, l'eau s'évapore et permet ainsi la formation de composés organo-phosphatés. Le greffage des ions phosphates sur le squelette carboné est assuré par la formation des ponts POC après imprégnation du support hydrophile par la solution d'acide phosphorique (Figure 1 ci dessous).

### Pyrolyse du précurseur :

Cette étape consiste en un traitement thermique du précurseur, dans un four à chauffage conventionnel fixe, rotatif ou à lit fluidisé, dans un pyrolyseur tubulaire (Fig. 2).

Le phosphore gazeux formé est transporté vers la zone froide et se condense sur les parois du réacteur. Le phosphore non condensé est barboté dans du méthanol (ou éthanol) et se solubilise dans ce dernier. Seul le gaz carbonique est évacué vers un extracteur et peut être récupéré et stocké pour une éventuelle utilisation.

A la fin de la réaction, le phosphore solide produit, peut être récupéré sous forme solide (en prenant les précautions nécessaires) ou solubilisé dans un solvant organique, de préférence une huile ou un alcool.

Les solutions organiques contenant le phosphore peuvent servir comme matière première pour la synthèse des composés phosphorés. Le phosphore blanc ou rouge a diverses applications dans la synthèse des matériaux à base de phosphore. Une autre application réside dans la production de l'acide phosphorique de haute pureté.

Le procédé se distingue par une valorisation presque totale de la matière première utilisée et génère une quantité limitée de sous-produits.

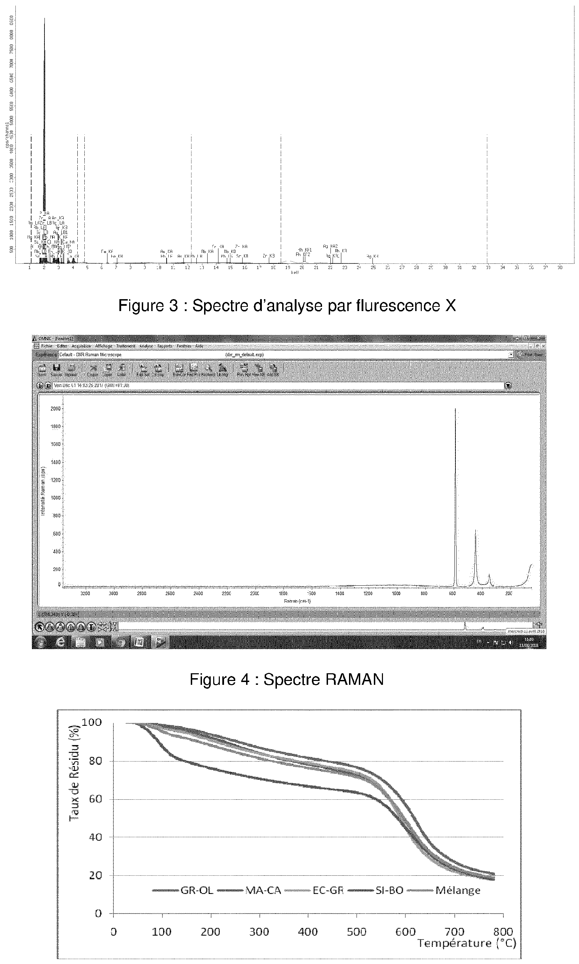

L'analyse par fluorescence (Fig. 3) a montré clairement que le matériau contient plus de 97% de phosphore. Pour déterminer la nature du phosphore obtenu, une étude par spectroscopie Raman a été effectuée.

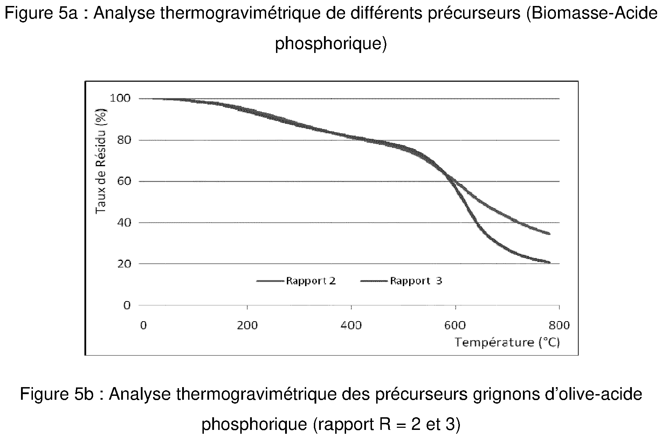

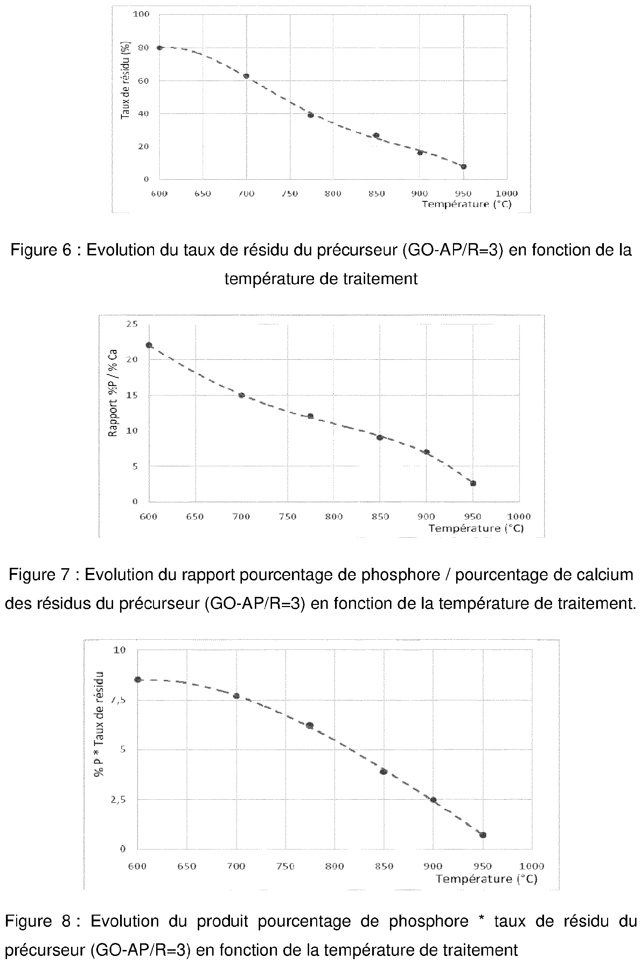

Le spectre Raman du matériau (Fig. 4) montre 3 modes fines qui correspondent exactement au phosphore blanc P4. En effet, une comparaison a été faite avec le spectre Raman du P4 réalisé dans les années 30 [5, 6]. Le mode le plus intense, polarisé, correspond au mode de respiration « breathing » du tétraèdre P4. L'analyse thermogravimétrique des différents échantillons en milieu inerte, montre que tous les échantillons présentent une même allure des thermogrammes, quelques soient les précurseurs utilisés (figure 5). Néanmoins, les taux de résidus dépendent énormément des quantités d'acides phosphoriques introduites lors de la préparation des précurseurs (figure 6).

En comparant les thermogrammes (figure 5) aux observations relevées lors de la pyrolyse du précurseur, on peut noter que vers la température 550°C, il y a apparition d'un brouillard de vapeurs ; un gaz qui commence à se former dans le tube à la sortie du four (au niveau du condenseur). Le débit de ces vapeurs augmente avec l'augmentation de la température de pyrolyse ainsi qu'avec la vitesse de chauffe du four. Le gaz se refroidit et se condense dans un échangeur tubulaire, placé juste à la sortie du pyrolyseur. Un système de piégeage, permet de récupérer le produit de la réaction P4 sous sa forme solide, déposé sur les parois des tubes.

L'analyse des thermogrammes (figure 6) montre que le taux de résidu dépend de la quantité d'acide phosphorique imprégnée dans la biomasse. Vers 750°C, la quantité de P4 générée avec un rapport 3 est plus importante que celle générée avec le rapport 2. La figure 6 montre que le taux de résidu décroit avec l'augmentation de la température. Il atteint une valeur de 8% à 950°C.

Sachant que la quantité du calcium du précurseur reste constante durant le traitement thermique, le suivi de l'évolution du rapport du pourcentage du phosphore sur le pourcentage de calcium donnera une idée précise sur la quantité de phosphore transformé. La figure 7 montre que le rapport des pourcentages de compositions passe de 22 (T=600°C) à 2,4 (950°C), ce qui montre que pratiquement la totalité du phosphore passe à l'état gazeux.

L'évolution du produit du pourcentage de phosphore par le taux de résidu, P*TR (Fig. 8) confirme les constations précédentes et montre bien que la quantité du phosphore résiduel à 950°C est très faible.

### Application industrielle

La réaction peut être effectuée à une température beaucoup plus basse que celle par la méthode classique, ainsi produisant une grande économie d'énergie. Comme application on peut envisager la production de l'acide phosphorique pure à usage alimentaire ou médicale.

### Références bibliographiques

1-phosphorus recovery from hydrothermal treatment of biomass; US008624070B2
2- Procédé de récupération du phosphore des boues organiques ; US006022514A.
3- Processes and equipment for production of elemental phosphorus and thermal phosphoric acid; US004919906
4- Method of preparing phosphorus: US006207024B1
5- S. Bhagantam, Ind. Jour. Phys., 5 73 (1930)
6- C. s. Venkateswaran, Proc. Ind. Acad. Sci., 2 260 (1935).

## Revendications

1. Procédé de préparation de phosphore élémentaire à partir d'acide phosphorique, **caractérisé en ce que** le procédé se fait en quatre étapes décrites ci-après :
étape 1 : réalisation d'un mélange d'acide phosphorique et d'une source hydrophile de carbone et d'hydrogène ;
étape 2 : préparation du précurseur par traitement thermique du mélange obtenu en étape 1 à une température allant de 80 à 150 °C ;
étape 3 : traitement thermique du précurseur dans une atmosphère inerte ou partiellement inerte à une température allant de 550°C à 950°C ;
étape 4 : récupération du phosphore.

2. Procédé selon la revendication 1, **caractérisé en ce que** la source de carbone et d'hydrogène est choisie parmi la matière cellulosique telle la biomasse végétale, les ressources fossiles telles que les schistes bitumineux, le fuel, les hydrocarbures lourds ou toute matière organique résiduelle comme le charbon actif usé, les résines échangeuses d'ions et les boues des STEP.

3. Procédé selon les revendications 1 et 2, **caractérisé en ce que** le traitement thermique du précurseur produit du phosphore à l'état gazeux à partir de 550°C.

4. Procédé selon l'une au moins des revendications 1 à 3, **caractérisé en ce que** le traitement thermique du précurseur s'effectue dans une atmosphère inerte, respectivement partiellement inerte composée d'azote, de vapeur d'eau et/ou de gaz carbonique.

5. Procédé selon l'une au moins des revendications 1 à 4, **caractérisé en ce que** le gaz formé est récupéré par condensation sous forme de phosphore blanc P4.

6. Procédé selon l'une au moins des revendications 1 à 5, **caractérisé en ce que** le gaz formé est récupéré par condensation sous forme de phosphore rouge

7. Procédé selon l'une au moins des revendications 1 à 6, **caractérisé en ce que** le gaz formé est soit solubilisé dans un solvant ou une huile organique soit dissout dans une huile minérale.

## Patentansprüche

1. Verfahren zur Herstellung von elementarem Phosphor aus Phosphorsäure, **dadurch gekennzeichnet, dass** das Verfahren in vier nachfolgend beschriebenen Stufen durchgeführt wird:
Schritt 1: Herstellung einer Mischung aus Phosphorsäure und einer hydrophilen Kohlenstoff- und Wasserstoffquelle;
Schritt 2: Herstellung des Vorläufers durch Wärmebehandlung der in Schritt 1 erhaltenen Mischung bei einer Temperatur im Bereich von 80 bis 150°C;
Schritt 3: Wärmebehandlung des Vorläufers in einer inerten oder teilweise inerten Atmosphäre bei einer Temperatur im Bereich von 550°C bis 950°C;
Schritt 4: Rückgewinnung des Phosphors.

2. Verfahren nach Anspruch 1, **dadurch gekennzeichnet, dass** die Kohlenstoff- und Wasserstoffquelle ausgewählt ist aus Zellulosematerial wie Pflanzenbiomasse, fossilen Ressourcen wie Ölschiefer, Heizöl, schweren Kohlenwasserstoffen oder jeglichen Reststoffen aus organischem Material wie verbrauchter Aktivkohle. Ionenaustauscher Harze und Klärschlamm.

3. Verfahren nach den Ansprüchen 1 und 2, **dadurch gekennzeichnet, dass** bei der Wärmebehandlung des Präkursors Phosphor in gasförmigem Zustand ab 550°C entsteht.

4. Verfahren nach mindestens einem der Ansprüche 1 bis 3, **dadurch gekennzeichnet, dass** die Wärmebehandlung des Präkursors in einer Atmosphäre aus Stickstoff, Wasserdampf und/oder Kohlendioxid durchgeführt wird.

5. Verfahren nach mindestens einem der Ansprüche 1 bis 4, **dadurch gekennzeichnet, dass** das gebildete Gas durch Kondensation in Form von weißem Phosphor P4 zurückgewonnen wird.

6. Verfahren nach mindestens einem der Ansprüche 1 bis 5, **dadurch gekennzeichnet, dass** das gebildete Gas durch Kondensation in Form von rotem Phosphor zurückgewonnen wird.

7. Verfahren nach mindestens einem der Ansprüche 1 bis 6, **dadurch gekennzeichnet, dass** das entstehende Gas entweder in einem Lösungsmittel oder einem organischen Öl gelöst oder in einem Mineralöl gelöst wird.

## Claims

1. Method for the preparation of elemental phosphorus from phosphoric acid, **characterized in that** the process is carried out in four steps described below:
step 1: production of a mixture of phosphoric acid and a hydrophilic source of carbon and hydrogen;
step 2: preparation of the precursor by heat treatment of the mixture obtained in step 1 at a temperature ranging from 80 to 150° C.;
step 3: heat treatment of the precursor in an inert or partially inert atmosphere at a temperature ranging from 550° C. to 950° C.;
step 4: recovery of phosphorus.

2. Method according to claim 1, **characterized in that** the source of carbon and hydrogen is selected from cellulosic material such as plant biomass, fossil resources such as oil shale, fuel oil, heavy hydrocarbons or any organic material residual such as spent activated carbon, ion exchange resins and WWTP sludge.

3. Method according to claims 1 and 2, **characterized in that** the heat treatment of the precursor produces phosphorus in the gaseous state from 550°C on.

4. Method according to at least one of claims 1 to 3, **characterized in that** the heat treatment of the precursor is carried out in an atmosphere composed of nitrogen, water vapor and/or carbon dioxide.

5. Method according to at least one of claims 1 to 4, **characterized in that** the gas formed is recovered by condensation in the form of white phosphorus P4.

6. Method according to at least one of claims 1 to 5, **characterized in that** the gas formed is recovered by condensation in the form of red phosphorus.

7. Method according to at least one of claims 1 to 6, **characterized in that** the gas formed is either dissolved in a solvent or an organic oil or dissolved in a mineral oil.
